# EUROPEAN PATENT APPLICATION

(11) **EP 4 465 464 A1**
(43) Date of publication of application: **20.11.2024**
(21) Application number: 24176454.7
(22) Date of filing: 16.05.2024
(51) Int. Cl.: H02G 3/30, F16L 3/233

(54) **ADHESIVE BASED CABLE TIE MOUNT**

(30) Priority: 16.05.2023 IN 202341034358
(71) Applicant: TE Connectivity India Private Limited, K.R. Puram Hobli, Bangalore 560066 (IN); Tyco Electronics UK Ltd, Wiltshire SN3 5HH (GB)
(72) Inventor: KARABAILU NAGALAKKANA GOWDA, Manjesh Gowda, 560066 Bangalore (IN); AMBAT, Rejish, 560066 Bangalore (IN); HEGDE KUNDAPURA, Niranjan, 560066 Bangalore (IN); MACNAUGHTON, Roy, Swindon, SN3 5HH (GB)
(74) Representative: Johnstone, Edward Ian

(57) **Abstract**

The present invention relates to an adhesive based cable tie mount (100) for attaching on a mounting surface to facilitate the mounting of cable ties to tie one or more cables or wires. The cable tie mount (100) comprises a top surface (102), a bottom surface (104), and a receiving cut-out portion (106) formed between said top surface and said bottom surface. The top surface comprises a first end (108), a second end (110), and a central portion (112) for placing said cables or wires. The bottom surface is configured to be attached with said mounting surface. A plurality of nubs (114) of predefined dimension are disposed in a spaced apart manner on said bottom surface. The nubs are configured to define a bond-line thickness between said bottom surface and sad mounting surface. The receiving cut-out portion is formed to accommodate said cable ties therein.

## Description

The present invention in general relates to securing and organizing cables in a neat and tidy manner. More particularly, the invention relates to cable tie mounts having adhesive based bonding surfaces, and their improvement regarding securing them to a mounting surface.

A cable tie mount is generally a small device, usually made of plastic or composite, that is used to secure cables involving cable ties such as zip ties and thereby mounting them along a surface so that they may traverse a predetermined course. Over the years these cable tie mounts have replaced the conventional methods of securing cables with fasteners such as clamps, which were required to be attached with the mounting surface by making holes or some other type of deformations. Now, these holes and/or deformations are unacceptable in body panels of certain ground vehicles, air crafts, space-bound vehicles used in aerospace etc. as they compromise their structural integrity thereof. Thus the cable tie mount may comprise a bonding surface that needs no screwing provision, and allows cables to be securely mounted at any location along the body panel i.e. mounting surface.

Cable tie mounts are generally provided with a resting surface for the cables to fall in, and small channels or slots provided in a transverse direction to said resting surface. Ties, such as zip ties are inserted through the channels or slots and closed around the cables to tie them in a tidy manner. Further, there are known techniques of fixing the bonding surface of the cable tie mount to a mounting surface which includes adhesive backing using peel-off sticker. However, one has to be mindful about the weight that the cables have while choosing a cable tie mount with peel-off sticker.

It is often necessary to mount a plurality of wires having a substantial weight using cable tie mounts. Accordingly, to provide a sturdy fixation of the cable tie mount, it is often considered to use a reliable adhesive, such as acrylic-based adhesive, rubber-based adhesive, epoxy adhesives, silicon adhesives etc. It is known in the art to put these types of adhesives on the bonding surface and to apply the cable tie mount to a mounting surface using an applicator. The applicator generally is used to apply pressure to the cable tie mount against the mounting surface, giving the adhesive enough time for curing, ensuring a proper seating of the cable tie mount.

Conventionally, the adhesives, in gel or other semi-liquid form, are poured onto the bonding surface and stuck on the mounting surface without considering the amount of adhesive and the weight increment because of the excess adhesive. However, in case of air-craft and space-bound vehicles, weight of the machines and components installed therein is of great concern, more so, because of the huge number of such tie mounts that are used. Additional weight of said excess adhesive thus affects in a cumulative manner.

A known way of addressing this problem is to use a specific type of adhesive having glass beads. Due to the added glass beads as reinforcing agent, the adhesive properties are increased which is one of the reasons of their application in automotive, aerospace and construction industries. These glass beads are generally spherical in shape, having a predetermined diameter. Thus these types of adhesives provide some dimensional standard regarding thickness of the adhesive used on the bonding surface. However, disadvantageously, one has to always depend on the standard set by the adhesive manufactures in addition to the possibility of uneven diameter of glass beads.

Furthermore, presently, remarkable improvements on numerous properties of adhesives are being carried out to drastically reduce the curing time thereof. Thus, it is often required or desired to use adhesive without glass beads to minimize the curing time while maintaining optimal thickness of the adhesive layer (bond-line thickness). Thus it is desirable to have predefined optimum bonding line thickness while installing cable tie mounts regardless of the type of adhesive used. However, known cable tie mounts do not include features dedicated to meet the requirements as discussed.

With a view therefore to overcome the technical problems associated with conventional cable tie mounts and their mounting methods, the inventors felt the need to develop a novel cable tie mount working towards achieving an optimum bond-line thickness with adhesive even without glass beads, at the same time reducing the weight of the cable tie mount without compromising the structural integrity thereof.

The solution is provided by an adhesive based cable tie mount for attaching on a mounting surface to facilitate the mounting of cable ties to tie one or more cables or wires. The cable tie mount comprises a top surface, a bottom surface, and a receiving cut-out portion formed between said top surface and said bottom surface. The top surface comprises a first end, a second end, and a central portion for placing said cables or wires. The bottom surface is configured to be attached with said mounting surface. A plurality of nubs or protrusions of predefined dimension are disposed in a spaced apart manner on said bottom surface. The nubs are configured to define a bond-line thickness between said bottom surface and said mounting surface when said cable tie mount is attached to said mounting surface. The receiving cut-out portion is formed to accommodate said cable ties therein.

The cable tie mount of the present invention may have an adhesive on the bottom surface thereof. However, it will be appreciated that the cable tie mount may be provided without any adhesive thereon, and that an adhesive may be applied to the bottom surface of the cable tie mount prior to attachment of the cable tie mount to a mounting surface.

The invention will now be described by way of example with reference to the accompanying drawings in which:
Figure 1 depicts a top perspective view of the invented adhesive cable tie mount according to an embodiment of the present invention.
Figure 2 depicts a perspective view of the invented adhesive cable tie mount turned upside down showing a bonding surface of the cable tie mount according to an embodiment of the present invention.
Figure 3 depicts an isometric perspective view of a sectional cut-out portion of the invented adhesive cable tie mount according to an embodiment of the present invention.

It is an object of the invention to provide a cable tie mount where an optimum bond-line thickness of adhesive is achieved when installing the cable tie mount without depending on the choice of adhesive.

With the choice of adhesive having minimal curing time, it is a further object of the invention to install a cable tie mount without using an applicator, thus reducing carbon foot-print and saving production cost at the same time.

It is a further object of the invention to reduce the material weight from a construction perspective of the invented individual cable tie mount leading to a cumulative weight reduction when a huge number of cable tie mounts are put into action.

According to the present invention, the above objects are achieved by providing an adhesive based cable tie mount for attaching on a mounting surface to facilitate the mounting of cable ties to tie one or more cables or wires. The cable tie mount comprises a top surface, a bottom surface, and a receiving cut-out portion formed between said top surface and said bottom surface. The top surface comprises a first end, a second end, and a central portion for placing said cables or wires. The bottom surface is configured to be attached with said mounting surface. A plurality of nubs or protrusions of predefined dimension are disposed in a spaced apart manner on said bottom surface. The nubs are configured to define a bond-line thickness between said bottom surface and said mounting surface. The receiving cut-out portion is formed to accommodate said cable ties therein.

In another aspect of the present invention, said plurality of nubs of predefined dimension are placed in symmetrical manner on said bottom surface. The cable tie mount may comprise at least three of the nubs. The nubs may be provided in a triangular arrangement.

In another aspect of the present invention, said cable tie mount comprises at least one groove formed on said bottom surface, to reduce the weight.

In another aspect of the present invention, said cable tie mount comprises at least one notch formed at a peripheral end of said cable tie mount to guide said cables or wires.

In another aspect of the present invention, said top surface is provided with a predefined slanting towards said central portion of said top surface extending between said first end and said second end.

In another aspect of the present invention, said top surface and said bottom surface are molded together as a single piece while maintaining said receiving cut-out portion.

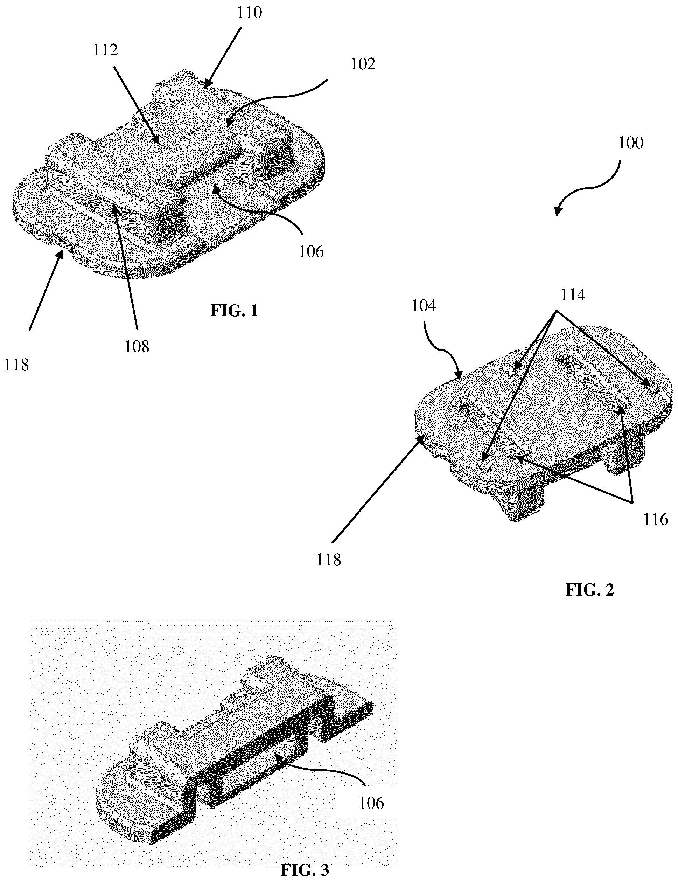

In the accompanying drawings, figures 1 and 2 depict top and bottom perspective views of a cable tie mount (100) according to an embodiment of the present invention that is configured to be attached on a mounting surface and for carrying one or more cables or wires. The cable tie mount (100) comprises a top portion defining a top surface (102), a bottom portion defining a bottom surface (104), a pair of columns or pillars that extend between and connect said top portion and said bottom portion, and a receiving cut-out portion or slot (106) that is formed between said top portion and said bottom portion and located between said columns or pillars. The top surface (102) is dedicated towards carrying cables or wires while being tied up with cable ties such as zip ties. On the other hand, the bottom surface (104) is purposed to be glued with a mounting surface such as on the body of an air-craft of space vehicle using a suitable adhesive.

According to a preferred embodiment of the invention, said top surface (102) and said bottom surface (104) are moulded together as a single piece, and the top surface (102) is raised above the bottom surface (104) while maintaining said receiving cut-out portion (106). The receiving cut-out portion (106), as shown in figure 3, is thus defined as the region formed between the top surface (102) and the bottom surface (104). The top surface (102) is formed with a first end (108) and a second end (110) which are defined along the direction in which the cables or wires traverse. The top surface (102) has a width that is greatest at its first and second ends (108, 110), and which is reduced at the location of the receiving cut-out portion (106). The receiving cut-out portion (106) extends through the cable tie mount (100) in a direction transverse to the direction in which the cables or wires traverse. In use of the cable tie mount (100), one or more cable ties may be put through the receiving cut-out portion (106) and tied around one or more cables or wires positioned on the top surface (102).

A central portion (112) of the top surface (102) is defined along a central line joining said first end (108) and said second end (110). The upper surface (102) is slanted to create a bias towards said central portion (112) such that the cable or wire may run along said central line. Further, a notch (118), preferably of 'U' or 'V'-shape, is formed at a peripheral end of said cable tie mount (100) to further guide said cables or wires. The notch (118) is preferably formed in-line with the central line of said top surface (102).

The bottom surface (104), as illustrated in figure 2, is provided with a plurality of nubs (114) that are disposed in a spaced apart manner. In the present embodiment, three nubs (114) are provided on the bottom surface (104) in a symmetrical manner in a triangular arrangement. The shape of said nubs (114), according to one embodiment, is hemispherical. However, a person skilled in the art would appreciate the fact that the functionality of said nubs (114) is not limitative to their shape, number, placement or dimension. The dimension or extension of said nubs (114) are selected based on the requirement of the installation site depending upon the requirement of thickness of adhesive.

As an adhesive is put on the bottom surface (104) and the cable tie mount (100) is pressed against the mounting surface, a bond-line thickness or gap is created between the mounting surface and the bottom surface (104). The gap is defined by the dimension of said nubs (114), which in turn also defines the optimum thickness of adhesive layer between the mounting surface and said bottom surface (104). For the purpose of attaching said cable tie mount (100) with glass bead type adhesive, the dimension of said nubs (114) can also be chosen in-line with the dimension of the glass beads.

Further, as shown in figure 3, grooves (116) are formed on said bottom surface (104) in a spaced apart manner. These grooves (116) are formed by carving out material from the bottom surface (104) while maintaining the structural integrity. In the present embodiment these grooves (116) extend into the columns via which the top surface (102) is connected to the bottom surface (104). These grooves (116) enable a reduction in the weight of the cable tie mount (100).

## Claims

1. An adhesive based cable tie mount (100) for attaching on a mounting surface to facilitate the mounting of cable ties to tie one or more cables or wires, said cable tie mount (100) comprising:
- a top surface (102) comprising a first end (108), a second end (110), and a central portion (112) for placing said cables or wires;
- a bottom surface (104) configured to be attached with said mounting surface, said bottom surface (104) comprising a plurality of nubs (114) of predefined dimension disposed in a spaced apart manner whereby said nubs (114) define a bond-line thickness between said bottom surface (104) and said mounting surface; and
- a receiving cut-out portion (106) formed between said top surface (102) and said bottom surface (104) that is configured to accommodate said cable ties therein.

2. The cable tie mount (100) as claimed in claim 1, wherein said plurality of nubs (114) of predefined dimension are placed in a symmetrical manner on said bottom surface (104).

3. The cable tie mount (100) as claimed in claim 1 or 2, wherein said cable tie mount (100) comprises at least one groove (116) formed on said bottom surface (104).

4. The cable tie mount (100) as claimed in any one of claims 1 to 3, wherein said cable tie mount (100) comprises at least one notch (118) formed at a peripheral end of said cable tie mount (100) to guide said cables or wires.

5. The cable tie mount (100) as claimed in any one of claims 1 to 4, wherein said top surface (102) is provided with a predefined slanting towards said central portion (112) of said top surface (102) extending between said first end (108) and said second end (110).

6. The cable tie mount (100) as claimed in any one of claims 1 to 5, wherein said top surface (102) and said bottom surface (104) are molded together as a single piece while maintaining said receiving cut-out portion (106).
